# EUROPEAN PATENT APPLICATION

(11) **EP 4 579 349 A1**
(43) Date of publication of application: **02.07.2025**
(21) Application number: 24220192.9
(22) Date of filing: 16.12.2024
(51) Int. Cl.: G03G 15/00, G06F 3/12

(54) **IMAGE FORMING APPARATUS AND PRINT SETTING CHANGING METHOD**

(30) Priority: 25.12.2023 JP 2023218663
(71) Applicant: KYOCERA Document Solutions Inc., Osaka-shi, Osaka, 540-8585 (JP)
(72) Inventor: MIYAI, Hiroyuki, Osaka-shi, Osaka, 540-8585 (JP)
(74) Representative: Herrero & Asociados, S.L.

(57) **Abstract**

A print setting controller (113) decides whether a combination of a sheet size and a sheet type specified for print setting is included in a combination table. When the combination of the sheet size and the sheet type specified for the print setting is included in the combination table, a controller (111) executes a print job according to the print setting. When the combination of the sheet size and the sheet type specified for the print setting is not included in the combination table, the print setting controller (113) selects a sheet type appropriate for the sheet size specified as the print setting, from the combination table, and changes the sheet type thus far designated to the selected sheet type. A display controller (112) causes a display device (121) to display a message to the effect that the sheet type has been changed.

## Description

### BACKGROUND

The present invention relates to image forming apparatus and a print setting changing method.

An image forming apparatuses is configured to execute a print job, according to a print setting specified by the user. When specifying the print setting, the user may instruct the execution of the print job without changing the sheet type, after having changed the sheet size. In the case where a sheet type that fits the sheet size is not selected, defective fixing performance or fixing offset may be incurred, and the print quality may be degraded. Further, the fixing device of the image forming apparatus may also be damaged.

Accordingly, some methods have been developed to reduce the error in sheet designation by the user, thereby properly executing the image forming operation. In addition, a method is known including comparing the print setting specified by the user and sheet information acquired from the printer, and notifying the comparison result to the user, thereby preventing a printing operation unintended by the user from being executed. Further, a method is known including comparing the sheet information about the printing sheet and the sheet feeder information, and notifying the comparison result to the user, thereby enabling the printed material desired by the user to be attained.

### SUMMARY

The invention proposes further improvement of the foregoing technique.

In an aspect, the invention provides an image forming apparatus including an image forming device, an input device, a storage device, a display device, a display controller, a print setting controller, and a controller. The image forming device includes a fixing device that fixes an image onto a sheet, and prints the image on the sheet. To the input device, an instruction from a user is inputted. The storage device contains a combination table, indicating prespecified appropriate combinations of a sheet size and a sheet type to be used for a print job. The display device displays an image. The display controller controls a displaying operation of the display device. The print setting controller changes, when detail of print setting inputted to the input device includes a combination of the sheet size and the sheet type not contained in the combination table, the combination of the sheet size and the sheet type specified as the print setting to the appropriate combination, according to the combination table. The controller causes the print job to be executed, according to the print setting. When the print setting controller changes the print setting, the display controller causes the display device to display a screen notifying the user that the print setting has been changed.

In another aspect, the invention provides a print setting changing method includes a print setting changing process including changing, when detail of print setting for a print job to be executed by an image forming device, inputted by a user, includes a combination of a sheet size and a sheet type not contained in a combination table containing prespecified appropriate combinations of the sheet size and the sheet type to be used for printing, the combination of the sheet size and the sheet type specified as the print setting to the appropriate combination, according to the combination table, and a displaying process including causing a display device, when the print setting is changed at the print setting changing process, to display a screen notifying the user that the print setting has been changed.

### BRIEF DESCRIPTION OF THE DRAWINGS

Fig. 1 is a block diagram showing an electrical configuration of an image forming apparatus;
Fig. 2 is a reference table showing an example of data combination;
Fig. 3 is a reference table showing an example of data configuration of sheet property information;
Fig. 4 is a flowchart for explaining a first embodiment of printing operation;
Fig. 5 is a schematic drawing showing an example of a screen displayed on a display device;
Fig. 6 is a schematic drawing showing another example of the screen displayed on the display device;
Fig. 7 is a flowchart for explaining a second embodiment of the printing operation;
Fig. 8 is a schematic drawing showing another example of the screen displayed on the display device;
Fig. 9 is a flowchart for explaining a third embodiment of the printing operation;
Fig. 10 is a flowchart for explaining a third embodiment of the printing operation, subsequent to Fig. 9;
Fig. 11 is a schematic drawing showing another example of the screen displayed on the display device; and
Fig. 12 is a schematic drawing showing still another example of the screen displayed on the display device.

### DETAILED DESCRIPTION

Hereafter, an image forming apparatus and a print setting changing method according to some embodiments of the invention will be described, with reference to the drawings. The image forming apparatus described in the following embodiments is, for example, a printer, a copier, or a facsimile machine that employs an electrophotographic process, or a multifunction peripheral having the mentioned functions.

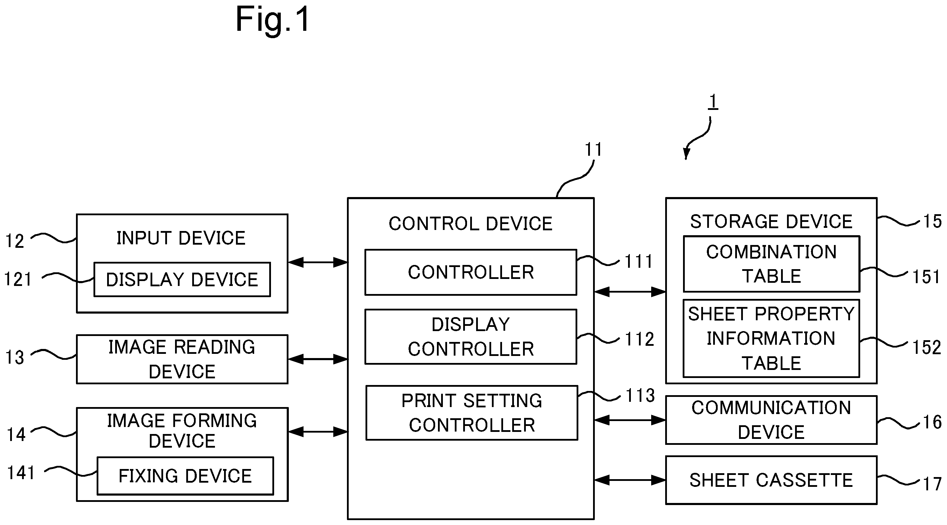

Fig. 1 is a block diagram showing an electrical configuration of the image forming apparatus. The image forming apparatus 1 includes a control device 11, an input device 12, an image reading device 13, an image forming device 14, a storage device 15, a communication device 16 and a plurality of sheet cassettes 17. The input device 12 includes hard keys such as an enter key and a start key for inputting or confirming various operations and settings, and a display device 121. The display device 121 includes, for example, a liquid crystal display (LCD), and displays operation screens and messages. The display device 121 may include a touch panel, as an integral part thereof.

The image reading device 13 includes a scanner, to read the image of a document and acquire image data. The image forming device 14 is a mechanism including a photoconductor drum, a charging device, an exposure device, a developing device and a primary transfer device, for each of the colors, and configured to form the image on a recording sheet, serving as a recording medium, by secondary transfer performed via an intermediate transfer belt. The image forming device 14 prints, for example, the image data acquired by the image reading device 13, or image data received by the communication device 16 from an external device, on the sheet. The image forming device 14 also includes a fixing device 141. The fixing device 141 includes a pressure roller and a heat roller. After the developing device forms a toner image on the surface of the sheet, the sheet is transported to the fixing device 141. Then the sheet is transported pinched between the pressure roller and the heat roller, so that the toner stuck to the surface of the sheet with an electrostatic force is fixed thereon. A controller 111 to be subsequently described causes the image forming device 14 and the fixing device 141 to execute a print job, according to the print setting inputted by the user to the input device 12.

The storage device 15 is a large-capacity memory unit such as a solid state drive (SSD) or a hard disk drive (HDD), for storing the image data, various programs, a combination table 151 and a sheet property information table 152, and so forth.

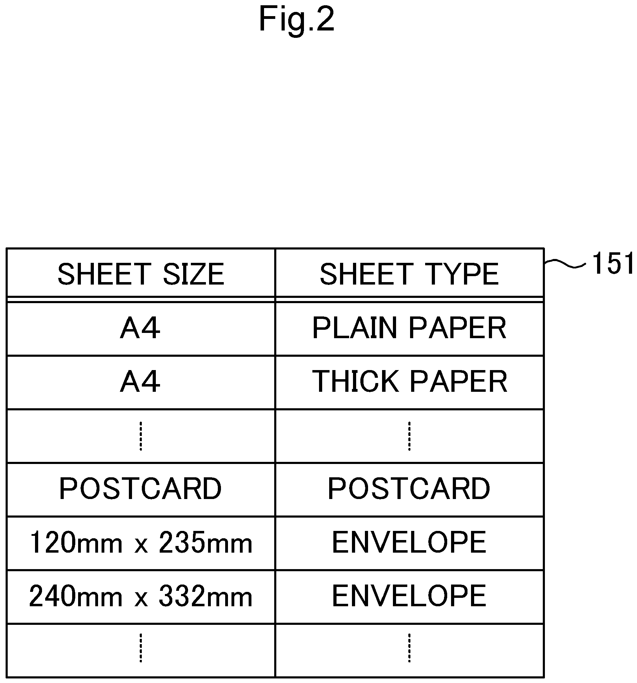

The combination table 151 is a data table, in which a plurality of appropriate combinations of a sheet size and a sheet type, to be used for the print job, are contained. Fig. 2 illustrates an example of the data configuration in the combination table 151. When the combination of the sheet size and the sheet type (e.g., thickness and quality of the sheet), included in the print setting, is inappropriate, a defective fixing performance or fixing offset is incurred, in the fixing process by the fixing device 141. Such cases may lead to degradation in print quality, and malfunction of the fixing device 141.

In the case of the printing of a postcard, for example, when the sheet type is specified as plain paper, while the sheet size is specified as postcard, in the print setting, the thickness of the postcard (approximately 0.22 mm) and that of the plain paper (approximately 0.1 mm) are different. Accordingly, when the image forming device 14 executes the printing (image forming) according to such a setting, the fixing process may fail to be properly performed.

Therefore, when the sheet size is changed to the postcard, a print setting controller 113, to be subsequently described, changes the sheet type to the appropriate combination (to the postcard), according to the combination table 151. In the combination table 151, the appropriate combinations of the sheet size and the sheet type, which assure that the printing is properly executed, are contained in advance. The print setting controller 113 changes the print setting, on the basis of the combination table 151.

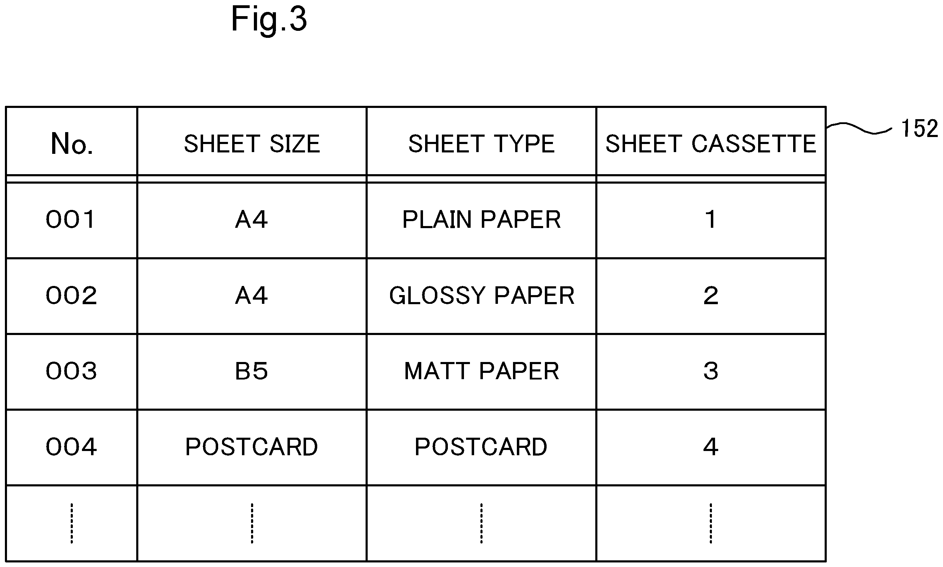

The sheet property information at least includes the combination of the sheet size and the sheet type, the number indicating the combination, and the sheet cassette corresponding to the combination. The sheet property information table 152 is a data table (media catalog) including a plurality of pieces of sheet property information. Fig. 3 illustrates an example of the data configuration contained in the sheet property information table 152. As shown in Fig. 3, the sheet property information table 152 contains a plurality of pieces of sheet property information, including the number (or ID or name) of the sheet property information), the sheet size, the sheet type, and the number of the sheet cassette corresponding to each of the sheets. The sheets registered in the sheet property information table 152 are placed on the sheet cassettes 17 of the respectively corresponding numbers.

The communication device 16 includes a communication module, and performs various types of data communication with an external device via a network. On the sheet cassette 17, the sheets to undergo the printing operation by the image forming device 14 are stored.

The control device 11 includes a processor, a random-access memory (RAM), a read-only memory (ROM), and so forth. The processor is, for example, a central processing unit (CPU), a micro processing unit (MPU), or an application specific integrated circuit (ASIC). The control device 11 acts as the controller 111, a display controller 112, and a print setting controller 113, when the processor executes a control program, for example stored in the ROM. Here, the mentioned components of the control device 11 may each be constituted in the form of a hardware circuit, instead of being realized by the operation according to the control program.

The controller 111 serves to control the overall operation of the image forming apparatus 1. The display controller 112 controls the displaying operation performed by the display device 121. The print setting controller 113 changes the sheet size and the sheet type, included in the print setting specified by the user, according to the combination table 151.

Hereunder, a first to third embodiments of the invention will be described in detail.

### First Embodiment

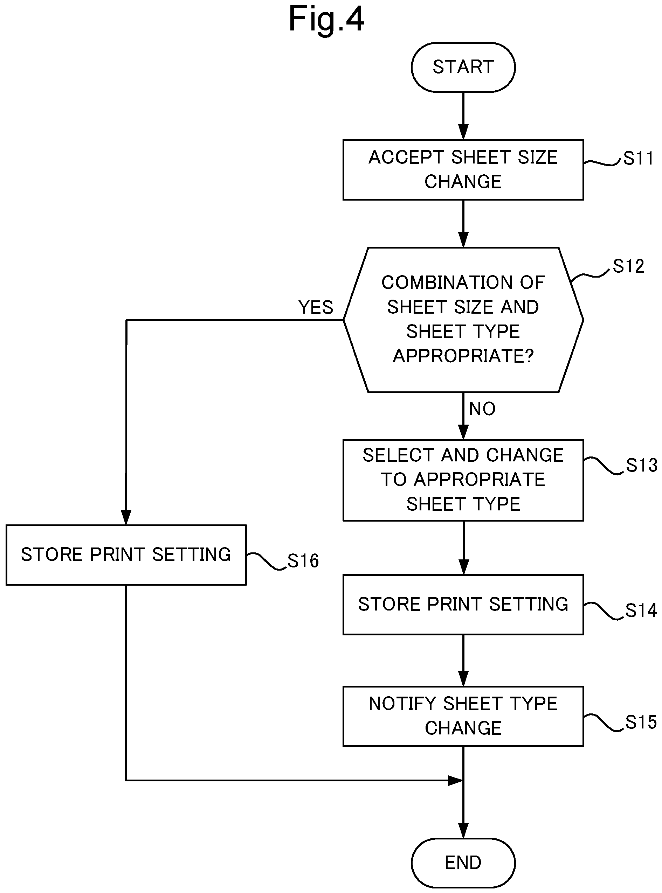

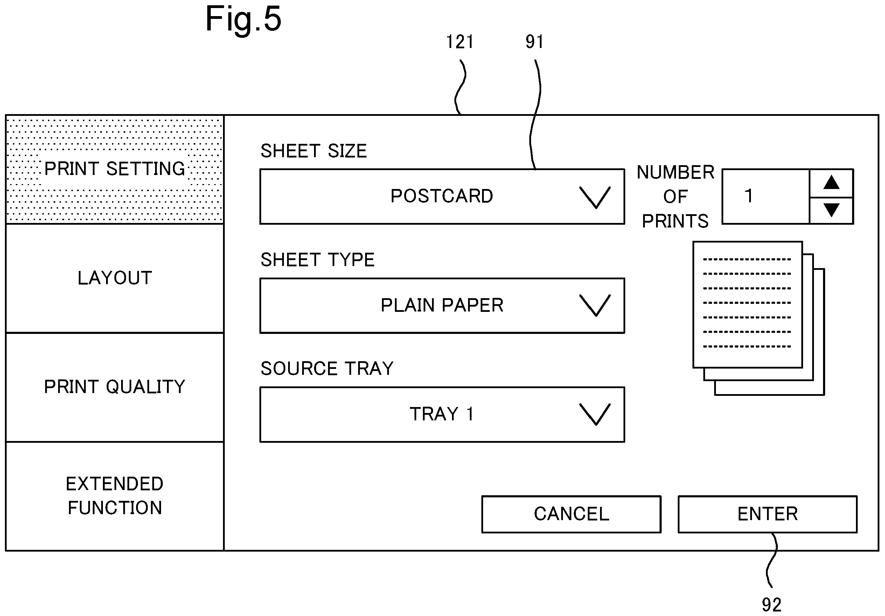

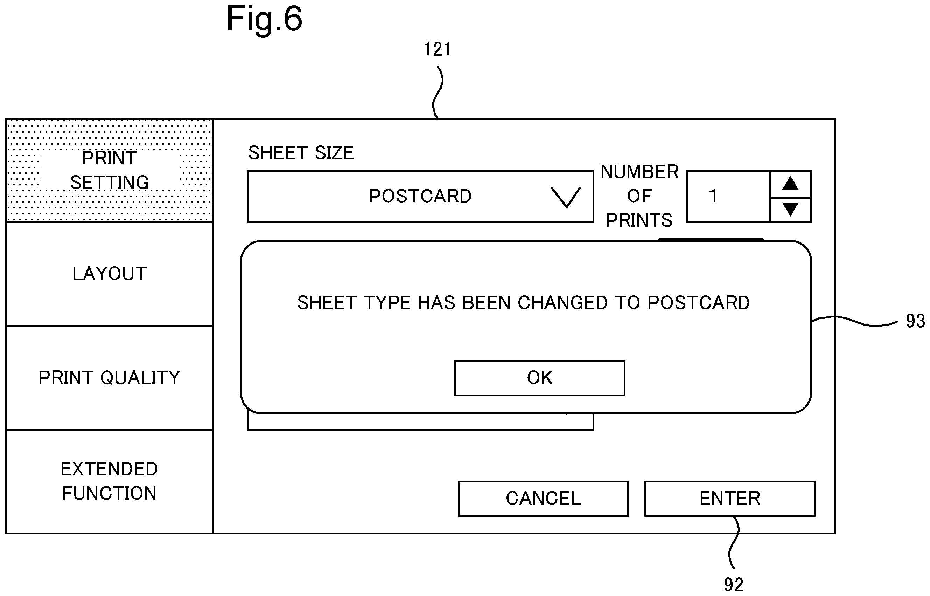

The first embodiment refers to the case where the user changes the print setting before executing the printing operation. Fig. 4 is a flowchart for explaining the first embodiment, and Fig. 5 and Fig. 6 are schematic drawings each showing an example of a print setting screen. The print setting screen is for inputting the setting of each of the items to be set for printing, for example when the image is to be formed on the sheet through the copying operation. It will be assumed here that the user has touched a selection field 91 for the sheet size in the print setting screen, while the print setting screen is displayed on the display device 121 under the control of the display controller 112, and the print setting controller 113 has received, according to the touch operation, the instruction to change the sheet size from "A4" to "postcard" (S11). Then the print setting controller 113 decides whether the combination of the sheet size and the sheet type in the print setting, changed according to the mentioned instruction, is contained in the combination table 151 (S 12). In other words, the print setting controller 113 decides whether the combination of the sheet size and the sheet type in the print setting specified at this point is an appropriate combination.

Upon deciding that the combination of the sheet size and the sheet type in the print setting is contained in the combination table 151 (YES at S12), the print setting controller 113 memorizes the combination of the sheet size and the sheet type received at this point as the print setting to be applied to the print job, according to the instruction from the user inputted through an enter button 92, indicating that the combination of the sheet size and the sheet type is appropriate (S16).

In contrast, upon deciding that the combination of the sheet size and the sheet type in the print setting is not contained in the combination table 151, in other words that the combination of the sheet size and the sheet type is inappropriate (NO at S12), the print setting controller 113 selects a sheet type appropriate for the specified sheet size, on the basis of the combinations of the sheet size and the sheet type contained in the combination table 151, and changes the sheet type in the combination changed as above, to the appropriate sheet type (S13). For example, when the user changes the sheet size from "A4" to "postcard" as shown in Fig. 5, the print setting controller 113 selects "postcard", which is the appropriate sheet type for the sheet size "postcard", out of the combination table 151, and changes "plain paper" thus far specified to "postcard", as the sheet type appropriate for the sheet size "postcard".

The print setting controller 113 memorizes the combination of the sheet size specified at this point, and the sheet type changed as above, as the print setting to be applied when the print job is executed (S14).

In the case where a plurality of appropriate sheet types are contained in the combination table 151 with respect to the sheet size, the display controller 112 may cause the display device 121 to display the list of the plurality of sheet types, so that the print setting controller 113 may change the sheet type thus far specified for the sheet size "postcard", to the sheet type indicated by the instruction from the user inputted to the input device 12.

The display controller 112 then causes the display device 121 to display a message notifying that the sheet type has been changed (S15). Fig. 6 illustrates an example of the screen displayed on the display device 121. The display controller 112 causes the display device 121 to display a message 93, for notifying the user that the sheet type has been changed to "postcard".

As described above, when the user changes the sheet size in the print setting, the print setting controller 113 decides whether the sheet size and the sheet type in the print setting constitute an appropriate combination, on the basis of the combination table 151, and selects the appropriate sheet type from the combination table 151, when the combination is inappropriate, and changes the sheet type inappropriate for the sheet size to the appropriate sheet type. Such an arrangement prevents the degradation in print quality and the damage to the fixing device 141.

### Second Embodiment

Hereunder, a process of deciding, after the controller 111 has started to execute the print job, whether the combination of the sheet size and the sheet type in the print setting is appropriate, and changing the sheet type, will be described.

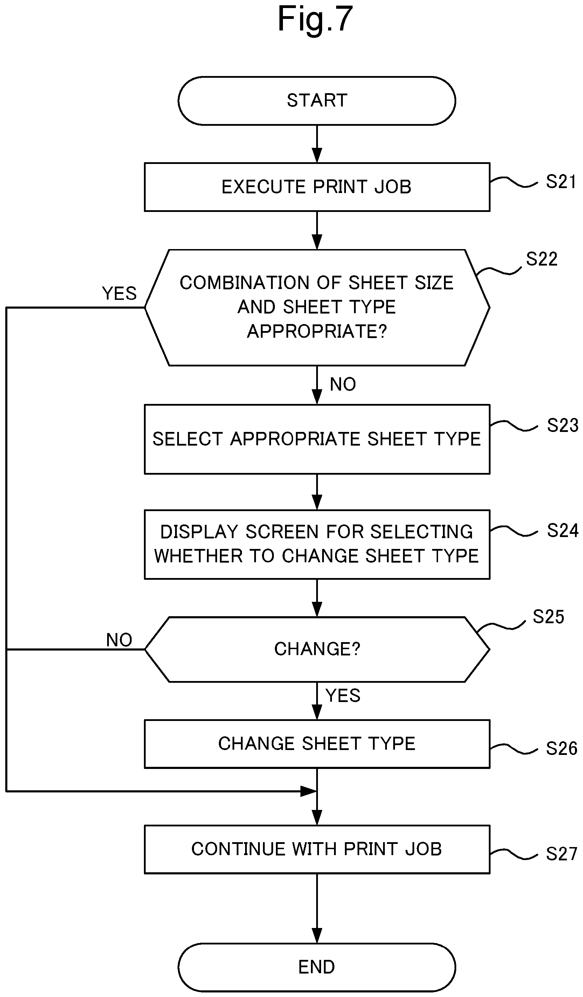

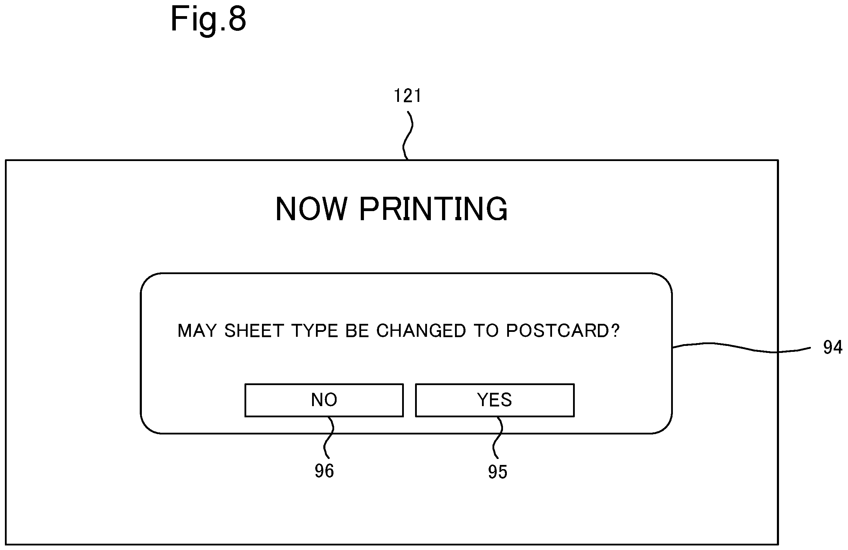

Fig. 7 is a flowchart for explaining a second embodiment, and Fig. 8 illustrates an example of the print setting screen. First, the controller 111 starts to execute the print job (S21). The print setting controller 113 decides whether the combination of the sheet size and the sheet type in the print setting specified at this point is contained in the combination table 151 (S22).

When the print setting controller 113 decides that the combination of the sheet size and the sheet type in the print setting is contained in the combination table 151 (YES at S22), the controller 111 continues with the printing operation, since the combination of the sheet size and the sheet type has been decided to be appropriate, and causes the image forming device 14 to execute the print job (S27).

In contrast, when the print setting controller 113 decides that the combination of the sheet size and the sheet type in the print setting is not contained in the combination table 151, in other words that the combination of the sheet size and the sheet type is inappropriate (NO at S22), the controller 111 suspends the print job, and the print setting controller 113 selects the sheet type appropriate for the sheet size being used, on the basis of the combinations of the sheet size and the sheet type contained in the combination table 151 (S23).

Then the display controller 112 causes the display device 121 to display a message screen 94 as shown in Fig. 8, asking the user whether the sheet type should be changed to the appropriate one (S24). When the user touches a YES button 95, and the print setting controller 113 receives the instruction to change the sheet type (YES at S25), the print setting controller 113 changes the sheet type thus far specified to the appropriate sheet type selected as above (S26). The controller 111 resumes the print job, and executes the print job according to the print setting including the sheet type that has been changed (S27).

In the case where the user touches a NO button 96, and the print setting controller 113 receives the instruction not to change the sheet type (NO at S25), the print setting controller 113 keeps the print setting (sheet type) unchanged, and the controller 111 continues with the printing operation, under the current print setting (S27).

### Third Embodiment

Hereunder, the registration of the sheet property information, and the printing operation based on the sheet property information will be described.

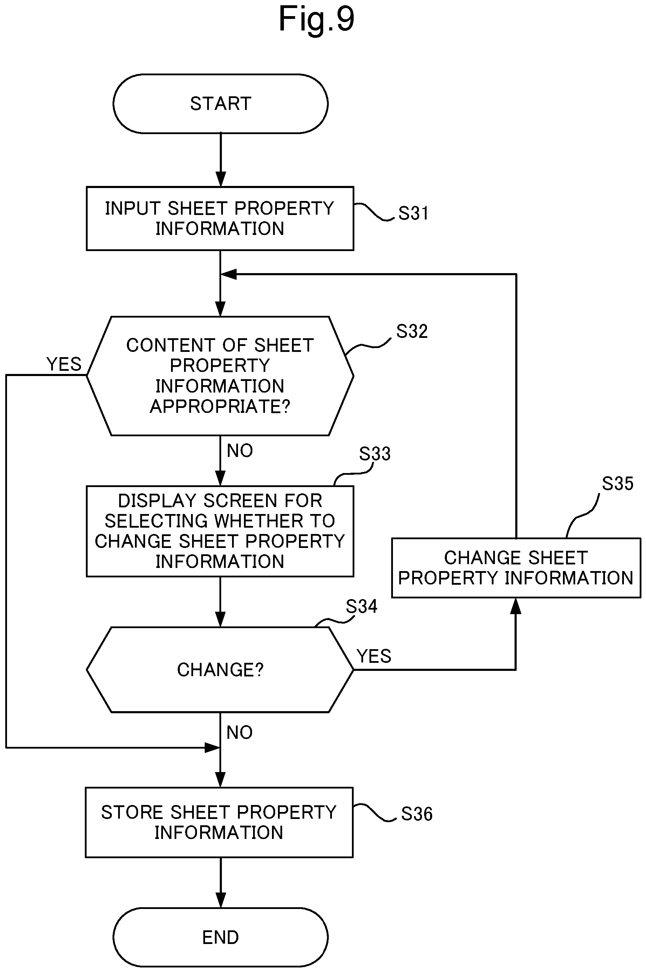

Fig. 9 is a flowchart showing the registration process of the sheet property information. When specifying, in association with the sheet cassette, the sheet size and the sheet type of the sheet stored therein, the user inputs the sheet property information to the input device 12, to thereby store the sheet property information in the sheet property information table 152, in which the sheet property information is contained.

More specifically, the user inputs the sheet property information, including the sheet cassette, the sheet size, and the sheet type, to the input device 12 (S31). The print setting controller 113 decides whether the combination of the sheet size and the sheet type indicated by the sheet property information inputted is contained in the combination table 151 (S32).

When the print setting controller 113 decides that the combination of the sheet size and the sheet type is not contained in the combination table 151 (NO at S32), the display controller 112 causes the display device 121 to display a selection screen, requesting for an instruction on whether to change the content of the sheet property information (S33). When the user inputs the instruction to change the content of the sheet property information to the input device 12 (YES at S34), the input device 12 receives the instruction to change the content of the sheet property information (S35), and the controller 111 proceeds to S32.

When the user inputs the instruction not to change the sheet property information to the input device 12 (NO at S34), and when the print setting controller 113 decides that the combination of the sheet size and the sheet type is contained in the combination table 151 (YES at S32), the controller 111 stores the sheet property information inputted at S31 in the sheet property information table 152 in the storage device 15 (S36).

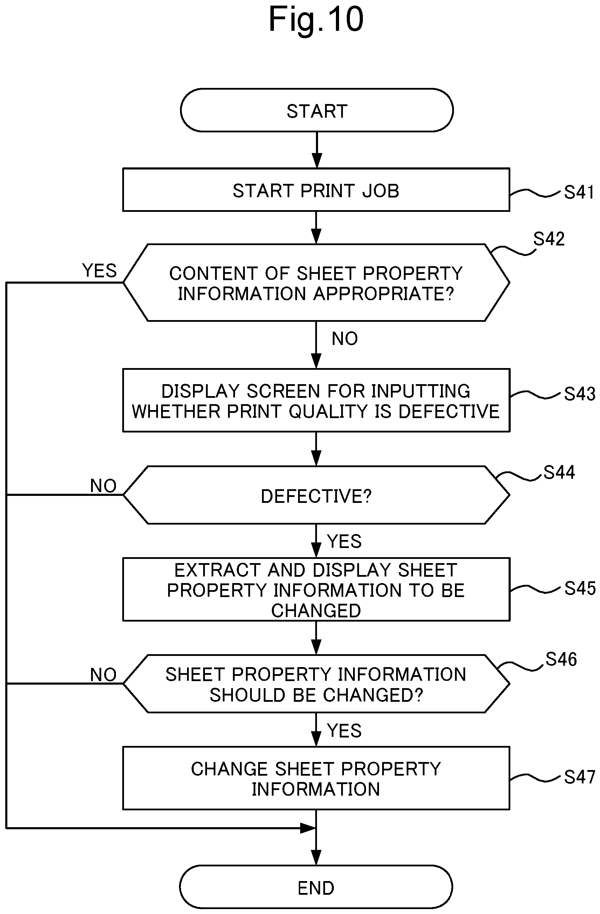

Fig. 10 is a flowchart showing a printing process that utilizes the sheet property information.

The controller 111 starts the print job, for which the sheet cassette to be used for the print job is designated (S41). In this case, the print setting controller 113 retrieves the combination of the sheet size and the sheet type associated with the designated sheet cassette, on the basis of the sheet property information contained in the sheet property information table 152, and decides whether the retrieved combination of the sheet size and the sheet type is contained in the combination table 151 (S42).

When the print setting controller 113 decides that the combination of the sheet size and the sheet type associated with the designated sheet cassette is contained in the combination table 151 (YES at S42), the controller 111 continues with the execution of the print job. Accordingly, the process shown in Fig. 10 is finished.

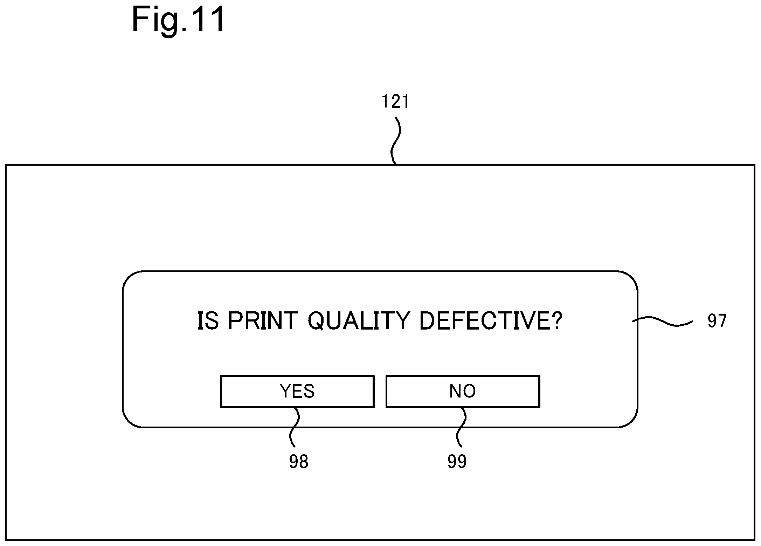

In contrast, when the print setting controller 113 decides that the combination of the sheet size and the sheet type is not contained in the combination table 151 (NO at S42), the display controller 112 causes the display device 121 to display a message, requesting the user to input whether the printed material obtained through the execution of the print job has a defect in the print quality (S43). Fig. 11 illustrates an example of such a screen displayed on the display device 121. In view of the message, the user checks the quality of the printed material.

When the printed material has no defect in the print quality, and therefore the user touches a NO button 99, thereby inputting the instruction not to change the property information to the input device 12 (NO at S44), the controller 111 continues with the execution of the print job. Accordingly, the process shown in Fig. 10 is finished.

In contrast, when the printed material has a defect in the print quality, and therefore the user touches a YES button 98, thereby inputting the instruction to change the property information to the input device 12 (YES at S44), the print setting controller 113 extracts the combination of the sheet size and the sheet type, including the sheet size associated with the sheet cassette designated for the print job, from the combination table 151. The display controller 112 then extracts all of the sheet property information, including the combination same as the combination of the sheet size and the sheet type associated with the sheet cassette designated for the print job, from the sheet property information table 152 in the storage device 15, and causes the display device 121 to display all of the extracted sheet property information, and the sheet type included therein (S45). Further, the display controller 112 causes the display device 121 to display a screen asking the user whether the sheet type, out of the combination of the sheet size and the sheet type included in all of the sheet property information extracted as above, should be changed to the prespecified appropriate sheet type, in other words requesting the user to select whether all of the sheet types in the sheet property information, contained in the sheet property information table 152, and including the sheet size and the sheet type associated with the sheet cassette designated for the print job (hereinafter, property information for print job), should be changed to the appropriate sheet type (S45).

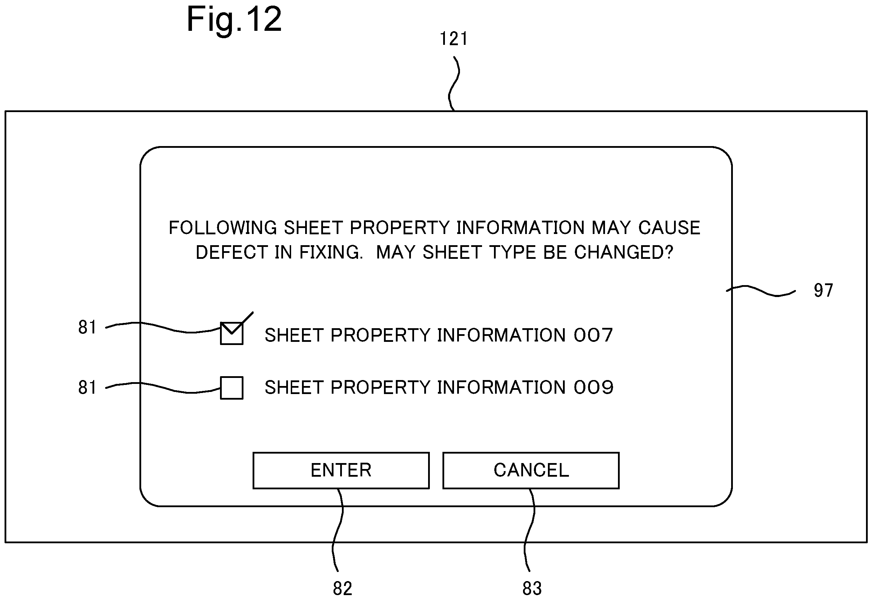

Fig. 12 illustrates an example of such a screen. The display controller 112 causes the display device 121 to display, along with the message requesting the user to select whether to change the sheet type to the prespecified appropriate sheet type, a list including the number (or name) of the sheet property information extracted by the print setting controller 113, and the sheet type included in the sheet property information. When the user touches a cancel button 83, thereby inputting the instruction to keep the sheet property information unchanged, to the input device 12 (NO at S46), the controller 111 continues with the execution of the print job. Accordingly, the process shown in Fig. 10 is finished.

In contrast, when the user touches a radio button 81 indicating the number of the sheet property information, and an enter button 82, thereby inputting to the input device 12 the sheet property information, the sheet type in which should be changed, and the instruction to execute such change (YES at S46), the print setting controller 113 changes the sheet type in all of the property information for print job, to the appropriate sheet type (S47). More specifically, the print setting controller 113 changes the sheet type in all of the property information for print job, to the sheet type included in the combinations of the sheet size and the sheet type extracted from the combination table 151. The print setting controller 113 stores all of the property information for print job, in which the sheet type has been changed as above, in the sheet property information table 152, in place of the sheet property information thus far stored.

According to the first to third embodiments, when the print setting controller 113 decides that the print setting, or the combination of the sheet size and the sheet type in the sheet property information, is inappropriate, the print setting controller 113 selects the appropriate sheet type from the combination table 151, and changes the inappropriate sheet type to the appropriate sheet type selected. Such an arrangement prevents the occurrence of defective fixing performance and fixing offset, arising from the inappropriate combination of the sheet size and the sheet type, thereby preventing the degradation in print quality and damage to the fixing device 141.

According to the foregoing embodiments, the sheet type is changed according to the combination table 151, when the combination of the sheet size and the sheet type is inappropriate. Instead, the sheet size may be changed, leaving the sheet type unchanged. In this case, the mentioned changing operation of the sheet type can also be applied to the changing of the sheet size.

In the case of the first-mentioned existing technique, an automatic identification mode in which the apparatus sets the sheet type, and a user designation mode in which the user sets the sheet type, are employed. However, the automatic identification mode is unable to handle the case where the user has failed to change the sheet property, and the user designation mode is unable to handle the case where the sheet property associated with the sheet cassette is different from the correct one. In the case of the second and third existing techniques, the user can receive a message, based on which the defective fixing performance or fixing offset may be avoided. However, the user has to again specify the print setting, which is troublesome. In contrast, with the arrangement according to the foregoing embodiments, the degradation in print quality and damage to the fixing device can be prevented, simply by correcting the inappropriate print setting.

## Claims

1. An image forming apparatus (1) comprising:
an image forming device (14) including a fixing device that fixes an image onto a sheet, and configured to print the image on the sheet;
an input device (12) to which an instruction from a user is inputted;
a storage device (15) containing a combination table, indicating prespecified appropriate combinations of a sheet size and a sheet type to be used for a print job;
a display device (121) that displays an image;
a display controller (112) that controls a displaying operation of the display device;
a print setting controller (113) that changes, when detail of print setting inputted to the input device (12) includes a combination of the sheet size and the sheet type not contained in the combination table, the combination of the sheet size and the sheet type specified as the print setting to the appropriate combination, according to the combination table; and
a controller (111) that causes the print job to be executed, according to the print setting,
wherein, when the print setting controller (113) changes the print setting, the display controller (112) causes the display device (121) to display a screen notifying the user that the print setting has been changed.

2. The image forming apparatus (1) according to claim 1,
wherein, when a plurality of the appropriate combinations are contained in the combination table, the display controller (112) causes the display device (121) to display details indicated by the plurality of the appropriate combinations, and
the print setting controller (113) changes the sheet type or the sheet size included in the print setting inputted to the input device (12), to the sheet type or the sheet size designated by a selection instruction inputted by the user to the input device (12).

3. The image forming apparatus (1) according to claim 1,
wherein the input device (12) receives an input of an instruction to start the print job, and
the controller (111) is configured to:
suspend the print job, when the print setting controller (113) detects, after starting the print job according to the inputted instruction to start the print job, and before the image forming device (14) prints the image on the sheet, that the print setting includes the combination of the sheet size and the sheet type not contained in the combination table, and
resume the print job, after the print setting controller (113) changes, when the input device (12) receives an instruction to change the print setting, the combination of the sheet size and the sheet type in the print setting to the appropriate combination, according to the combination table, and cause the image forming device (14) to execute the print job according to the print setting.

4. The image forming apparatus (1) according to claim 1,
wherein the storage device (15) contains sheet property information at least including the combination of the sheet size and the sheet type and a sheet cassette associated with the combination,
the controller (111) identifies the sheet size and the sheet type associated with the sheet cassette indicated by the print job, on a basis of the sheet property information, and executes the print job with the sheet size and the sheet type identified, and
when the combination of the sheet size and the sheet type included in the sheet property information is not contained in the combination table, the print setting controller (113) changes the sheet type included in the sheet property information, to the sheet type included in the combination of the sheet size and the sheet type, including a same sheet size as the sheet size included in the sheet property information, and contained in the combination table.

5. The image forming apparatus (1) according to claim 4,
wherein the input device (12) receives, after the controller (111) has executed the print job, an input indicating whether a printed material printed by the image forming device (14) according to the print job has a defect in print quality, and
when the input device (12) receives the input indicating that the print quality is defective, the print setting controller (113) changes the sheet type included in the sheet property information, to the sheet type included in the combination of the sheet size and the sheet type, including the same sheet size as the sheet size included in the sheet property information, and contained in the combination table.

6. The image forming apparatus (1) according to claim 5,
wherein, when the input device (12) receives the input indicating that the print quality is defective, the print setting controller (113) extracts, from the storage device (15), other sheet property information including the same combination of the sheet size and the sheet type as the combination included in the sheet property information used for the print job, and changes the sheet type in the other sheet property information extracted, to the sheet type included in the combination of the sheet size and the sheet type, including the same sheet size as the sheet size included in the sheet property information, and contained in the combination table.

7. A print setting changing method comprising:
a print setting changing process including changing, when detail of print setting for a print job to be executed by an image forming device (14), inputted by a user, includes a combination of a sheet size and a sheet type not contained in a combination table containing prespecified appropriate combinations of the sheet size and the sheet type to be used for printing, the combination of the sheet size and the sheet type specified as the print setting to the appropriate combination, according to the combination table; and
a displaying process including causing a display device (121), when the print setting is changed at the print setting changing process, to display a screen notifying the user that the print setting has been changed.
